## Europäisches Patentamt
## European Patent Office
## Office européen des brevets

(19)

(11) Numéro de publication: **0 075 519**
**B1**

(12)
# FASCICULE DE BREVET EUROPÉEN

(45) Date de publication du fascicule du brevet:
26.11.86

(51) Int. Cl.⁴: **B 62 D 5/14, F 15 B 9/14**

(21) Numéro de dépôt: **82401711.5**

(22) Date de dépôt: **21.09.82**

---

(54) **Mécanisme d'actionnement à assistance par fluide, notamment pour système de servo-direction de véhicule automobile.**

---

(30) Priorité: **23.09.81 ES 506437**

(43) Date de publication de la demande:
**30.03.83 Bulletin 83/13**

(45) Mention de la délivrance du brevet:
**26.11.86 Bulletin 86/48**

(84) Etats contractants désignés:
**DE FR GB IT**

(56) Documents cité:
**DE-A-1 800 725**
**FR-A-2 401 818**
**GB-A-841 567**
**GB-A-2 085 380**
**US-A-1 817 903**
**US-A-2 030 902**

(73) Titulaire: **BENDIX ESPANA S.A., Balmes 243, Barcelona 6 (ES)**

(72) Inventeur: **Bacardit, Juan Simon, Calle Mallorça 451, Barcelona 13 (ES)**

(74) Mandataire: **Le Moenner, Gabriel, SERVICE BREVETS BENDIX 44, Rue François 1er, F-75008 Paris (FR)**

LIBER, STOCKHOLM 1986

EP 0 075 519 B1

## Description

La présente invention concerne les mécanismes d'actionnement à assistance par fluide, plus particulièrement pour systèmes de servo-direction de véhicules automobiles.

Des agencements connus de ce type de mécanisme d'actionnement mettent habituellement en oeuvre un groupe fonctionnel comprenant un boîtier de direction, un mécanisme d'actionnement à transmission multiplicatrice, et un distributeur hydraulique commandant le fonctionnement du mécanisme d'actionnement. Un exemple typique de ce type d'agencement est décrit par exemple dans le brevet US 2 410 049 ou dans le brevet britannique 1 576 153 au nom de la demanderesse, et comporte, dans un boîtier de servodirection, un organe d'entrée de transmission formant vis coopérant, par l'intermédiaire de chemins de roulements à billes, avec un mécanisme de transmission réalisé sous la forme d'un écrou coaxial à la vis et au distributeur, l'écrou, à déplacement linéaire, formant le piston du moteur d'assistance, et comportant des dents de crémaillère engrenant avec un organe de sortie constitué d'un secteur denté solidaire de l'arbre de sortie du mécanisme.

Le document DE-A-1800 725 décrit un mécanisme d'actionnement à assistance par fluide comprenant un organe d'entrée, destiné à être relié à un système de commande d'actionnement par l'intermédiaire d'un distributeur de fluide rotatif et comprenant un pignon coopérant en engrènement avec un secteur denté formé sur une zone périphérique d'un corps au moins partiellement discoïdé supporté en rotation autour d'un arbre dans un boîtier et solidaire d'un organe de sortie destiné à être relié à un système mené à actionner, le corps comportant des moyens coopérant à coulissement étanche avec des parois intérieures du boîtier et avec une cloison transversale fixe s'étendant entre les parois intérieures en vis-à-vis du boîtier pour définir, dans le boîtier, une paire de chambres de travail reliées au distributeur.

Dans le mécanisme de ce document, le corps, en forme de secteur, comporte des ailettes de piston sur ses bords radiaux et une partie de moyen cylindrique coopérant avec la cloison transversale fixe dans un agencement encombrant délicat et n'autorisant que peu d'adaptations et variantes de réalisation, notamment en ce qui concerne l'aménagement de l'organe de sortie et des chambres d'assistance.

La présente invention a précisément pour objet de proposer un mécanisme d'actionnement à assistance par fluide du type défini ci-dessus, de structure particulièrement simple et compacte, avec une inertie mécanique et opérationnelle minima, et offrant une grande versalité tant vis-à-vis des dispositions respectives des organes d'entrée et de sortie du mécanisme que vis-à-vis des aménagements des chambres d'assistance.

Pour ce faire, selon l'invention le mécanisme d'actionnement à assistance par fluide du type, comprenant un organe d'entrée, destiné à être relié à un système de commande d'actionnement par l'intermédiaire d'un distributeur de fluide rotatif et comprenant un pignon coopérant en engrènement avec un secteur denté formé sur une zone périphérique d'un corps au moins partiellement discoïde supporté en rotation autour d'un arbre dans un boîtier et solidaire d'un organe de sortie destiné à être relié à un système mené à actionner, le corps comportant des moyens coopérant à coulissement étanche avec des parois intérieures du boîtier et avec une cloison transversale fixe s'étendant entre les parois intérieures en vis-à-vis du boîtier pour définir, dans le boîtier, une paire de chambres de travail reliées au distributeur, est caractérisé en ce que le corps comporte au moins une fenêtre traversante en forme de secteur de couronne coaxial à l'axe de l'arbre et dans laquelle est disposée la cloison transversale fixe dont les extrémités radialement opposées coopèrent à coulissement étanche avec les parois cylindriques de la fenêtre pour définir dans cette dernière ladite paire de chambres de travail.

Avec un tel agencement, il est possible de multiplier, selon les besoins, les chambres de travail intérieures dans le corps et/ou de leur adjoindre des chambres de travail extérieures au corps, d'aménager les organes d'entrées et de sortie suivant de nombreuses possibilités sans modifier l'encombrement général de mécanisme ni en obérer la robustesse.

D'autres caractéristiques et avantages de la présente invention ressortiront de la description suivante de divers modes de réalisation, donnés à titre illustratif et non limitatif, faite en relation avec les dessins annexés, sur lesquels:
- la figure 1 est une vue en coupe axiale d'un premier mode de réalisation d'un mécanisme d'actionnement à assistance à l'invention;
- la figure 2 est une vue en coupe transversale suivant le plan II-II de la figure 1;
- la figure 3 est une vue en coupe axiale en plan prise dans le plan III-III de la figure 2;
- la figure 4 est une coupe axiale, partielle d'un autre mode de réalisation de la transmission et de la disposition de l'organe d'entrée;
- la figure 5 est une coupe partielle de la partie inférieure du boitier et représente la disposition d'un système de butée de fin de course de l'organe de sortie des figures précédentes;
- la figure 6 est une vue de face en demi-coupe transversale du mode de réalisation de la figure 5;
- la figure 7 est une vue similaire à celle de la figure 5 et illustre une variante avec l'organe de sortie solidaire d'un arbre de sortie;
- la figure 8 est une coupe partielle analogue à la figure 4 d'un autre mode de réalisation du mécanisme d'actionnement selon l'invention;
- la figure 9 est une coupe axiale d'un autre mode de réalisation du mécanisme

d'actionnement muni d'une roue d' engrenage en forme de secteur; et

- la figure 10 est une vue en plan du mécanisme de la figure 9, la partie de boîtier 40 (et le distributeur) étant enlevés.

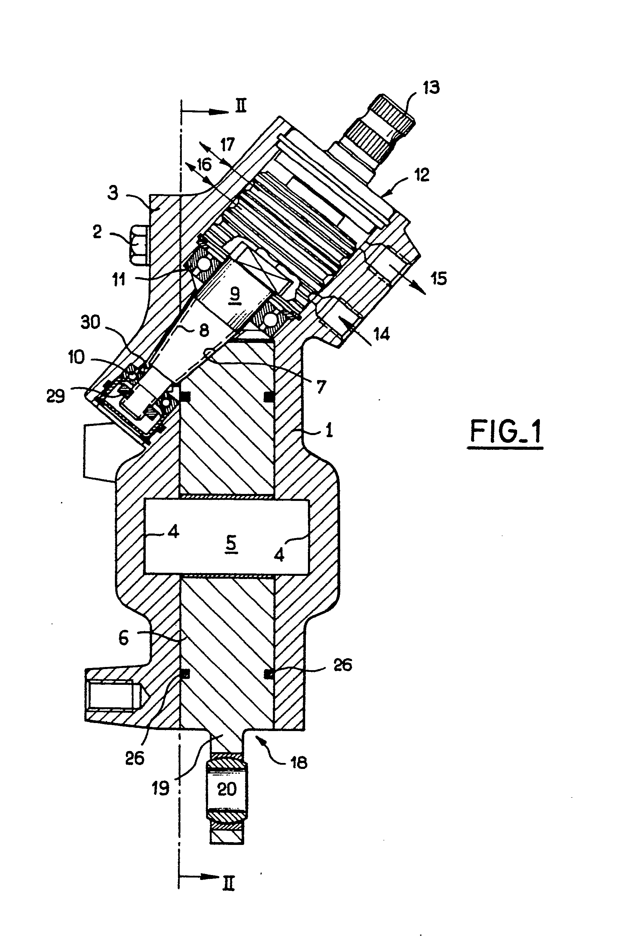

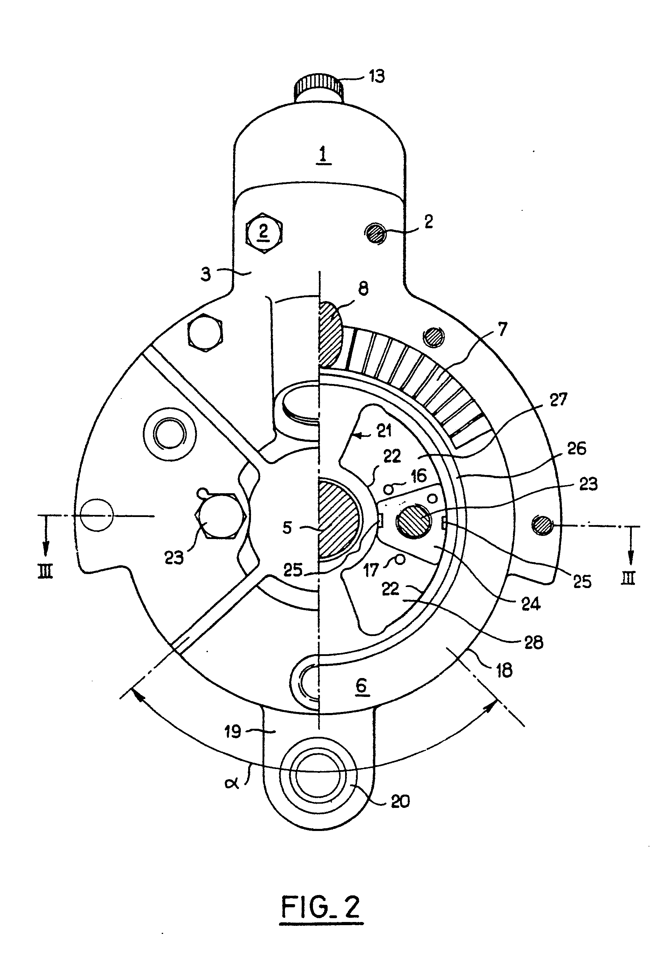

Dans le mode de réalisation des figures 1 à 3, le mécanisme est in corporé dans un boitier comprenant un corps de boitier creux 1, ayant la forme générale d'une cuvette plane définissant une cavité cylindrique, dont l'ouverture est fermée par un couvercle 3 au moyen de vis périphériques 2. Les faces internes opposées du corps de boîtier 1 et du couvercle 3 sont parallèles et sont toutes deux munies, en vis-à-vis, d'évidements centraux coaxiaux 4 dans lesquels viennent se loger les extrémités d'un axe fixe 5 sur lequel peut tourner, entre les parois du boîtier, une roue d'engrenage discoîde 6 dotée périphériquement d'une couronne à denture conique 7, dans la position représentée, en face du couvercle 3.

La roue à secteur denté 6 forme une transmission multiplicatrice d'effort avec un pignon 8 complémentaire de la denture 7, formé sur un axe court 9 dont les extrémités sont supportées en rotation dans des paliers 10 et 11 aménagés respectivement dans le couvercle 3 et dans le corps de boîtier 1, la roue 6 constituant l'organe de sortie de la transmission.

L'axe 9 forme l'organe secondaire ou de sortie d'un distributeur hydraulique 12 servant à la commande des chambres d'un moteur d'assistance à fluide, comme on le verra ultérieurement, l'organe primare ou d'entrée du distributeur étant constitué par un arbre cannelé 13 destiné à être relié typiquement à un volant de direction. Le distributeur 12 peut être de n'importe quel type connu dont les organes internes sont actionnés en fonction d'une certaine course morte possible entre les organes primaire et secondaire. Ce distributeur est avantageusement du type rotatif, à rotor et chemise coaxiaux, ou par exemple du type en étoile décrit de façon détaillée dans d'autres brevets de la demanderesse (notamment le brevet britannique 1 576 153, dont le contenu est supposé intégré ici pour référence), et comporte classiquement des entrées et sorties 14, 15 de liquide hydraulique de commande et au moins une paire de passages de distribution 16 et 17 reliés aux chambres antagonistes d'au moins un moteur à fluide d'assistance par l'intermédiaire de conduites (non représentées).

La partie inférieure (sur les dessins) du corps de boîtier 1 et/ou du couvercle 3 est découpée de manière à former un évidement périphérique 18 exposant une zone sectorielle de la tranche périphérique de la roue dentée 6 à partir de laquelle fait saillie sensiblement radialement vers l'extérieur un bras de faible longueur 19 muni d'une articulation à rotule 20 pour sa connexion à la manivelle d'une tringlerie de direction.

La mise en oeuvre d'une transmission multiplicatrice à roue et pignon en engrènement direct, comportant un pignon à conicité ou convergence réduite du type décrit ci-dessus, permet de disposer l'organe d'entrée 9 de la transmission de façon qu'il s'étende dans le boîtier 1, 3 du mécanisme en formant un angle obtus par rapport au corps du boîtier 1. Les organes d'entrée et de sortie 9 et 19 de la transmission sont par suite orientés dans une position appropriée, respectivement tant pour leur raccordement à la colonne de direction provenant du volant que pour recevoir la bielle transversale ou manivelle d'actionnement de la tringlerie de direction. D'autre part, la forme extrêmement aplatie du mécanisme, qui occupe une dimension longitudinale réduite, permet de l'installer aisément à l'intérieur des structures d'un véhicule.

Dans les modes de réalisation des figures 1 à 8, le corps de roue 6 comporte dans son voile au moins une, et de préférence deux fenêtres symétriques 21 diamétralement opposées, chacune en forme de secteur de couronne et munie de deux parois 22 cylindriques et coaxiales à l'axe de rotation 5. Dans chaque fenêtre 21 est disposé un bloc transversal formant cloison 24, fixé au corps de boîtier 1 et au couvercle 3 par une vis 23 traversant ces derniers. Ce bloc 24 est ajusté hermétiquement sur les parois en vis-à-vis du corps de boîtier et du couvercle contre lesquelles il est plaqué et sur les parois cylindriques 22 de la fenêtre correspondante au moyen de joints tels que 25. En outre, la zone circulaire centrale de la roue 6 dans laquelle sont inscrites les fenêtres en question est fermée de part et d'autre de la roue par deux joints annulaires 26 qui coopèrent en contact étanche avec le corps de boîtier 1 et le couvercle 3 de manière que, à l'intérieur de chaque fenêtre 21, soient définies deux chambres de travail mutuellement isolées 27 et 28 reliées par des moyens classiques aux passages de distribution respectifs 16 et 17 du distributeur 12 afin de former les chambres opposées d'un moteur d'assistance à fluide à double effet. On comprendra qu'une pression du fluide à l'intérieur de l'une quelconque des chambres en question exerce une force d'actionnement sur la surface latérale extrême de la chambre opposée à la paroi radiale correspondante du bloc ou cloison fixe 24.

Un autre avantage d'une telle disposition réside dans le fait que le montage coulissant du roulement 10 sur l'extrémité extérieure de l'axe court 9, entre un écrou d'extrémité 29 et un empilement de ressorts Belleville 30, facilite considérablement le réglage du degré d'engrènement entre le pignon 8 et la roue dentrée 6.

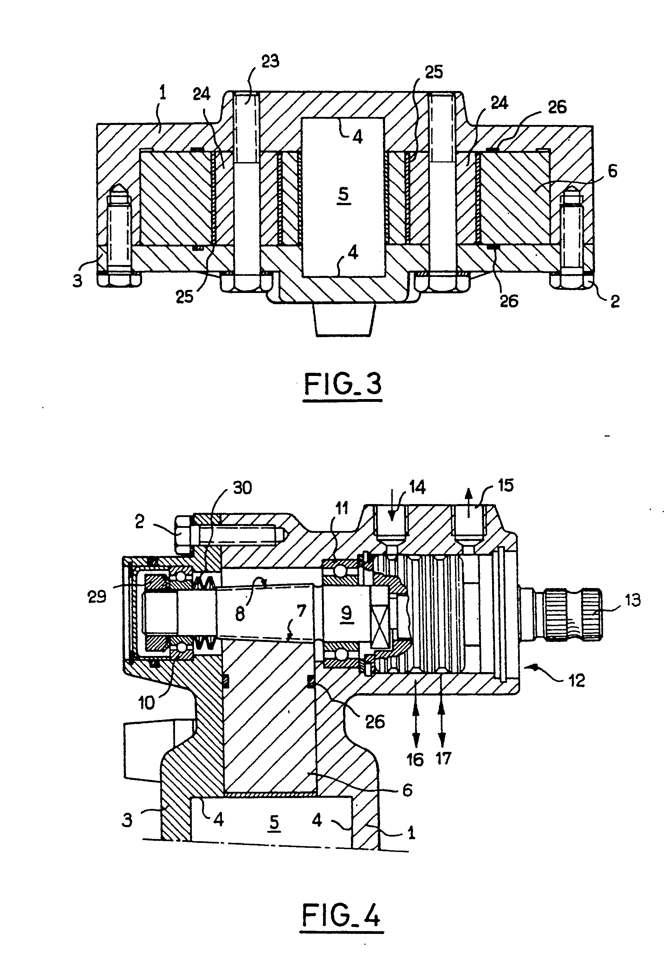

On rencontre à nouveau une disposition semblable dans la variante de la figure 4 qui ne diffère de la précédente que par le fait que les axes 5 et 9 de la roue et du pignon sont parallèles, bien que l'on conserve néanmoins la caractéristique d'une denture conique et d'un pignon à convergence réduite. Dans ce cas, comme dans les autres variantes analogues, les mêmes références désignent les mêmes éléments que dans le mode de réalisation des figures 1 à 3.

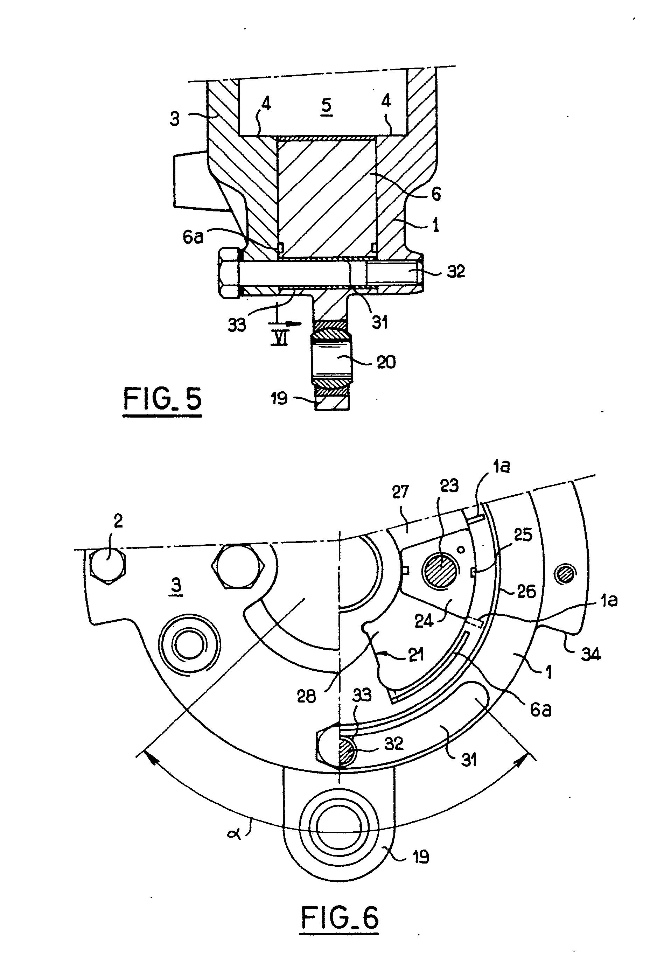

Les figures 5 et 6, qui représentent exclusivement la partie inférieure du mécanisme, montrent l'aménagement de butées de fin de course pour la roue 6. La partie inférieure de la roue 6 est munie d'une lumière courbe 31, coaxiale à l'axe 5, dont les extrémités définissent les limites de la course d'oscillation prévue pour la roue par rapport à une position neutre ou à un point central où une vis 32, munie d'une entretoise 33, traverse la lumière 31 pour être fixée au corps de boîtier 1 et au couvercle 3. La limitation de course peut néanmoins être réalisée d'une autre manière, par exemple mécaniquement, en conformant les extrémités opposées 34 de l'évidement périphérique 18 du boîtier de manière à ce qu'elles définissent, en coopérant avec le bras 19, les limites d'oscillation de ce bras 19, solidaire de la roue, ou bien hydrauliquement, en annulant l'assistance hydraulique grâce à des rainures 6a et 1a associées aux chambres 27 et 28 et prévues respectivement dans la roue 6 et dans le corps de boitier et le couvercle, afin qu'en position de fin de course, les deux chambres de travail opposées 27 et 28 d'une même fenêtre 21 communiquent entre elles.

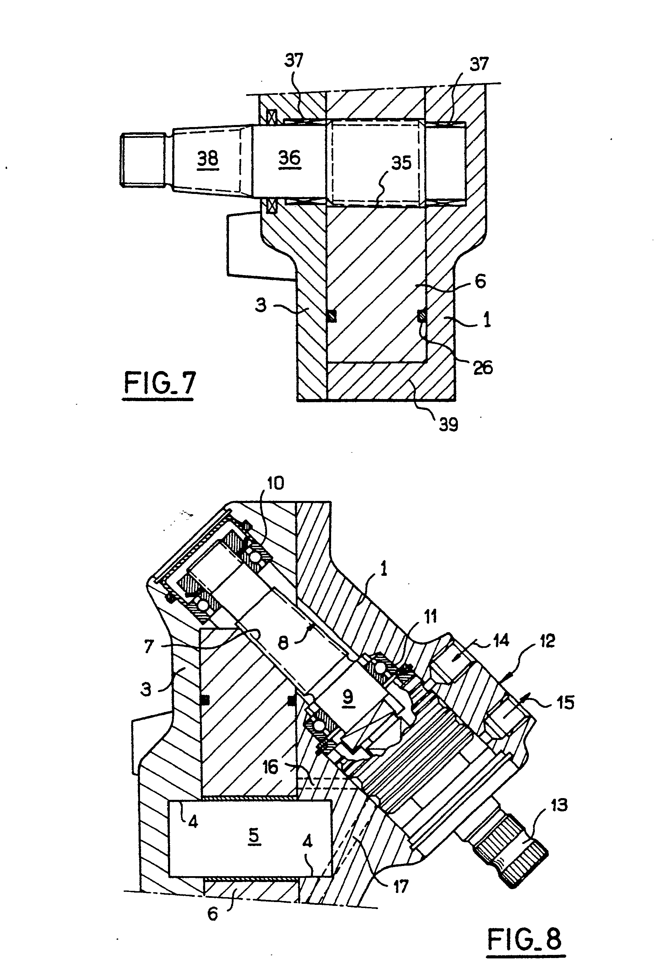

Il est possible également de modifier, conformément à l'invention, la disposition de l'organe de sortie du mécanisme, par exemple comme représenté sur la figure 7.

Dans ce mode de réalisation, identique par ailleurs aux précédents, la roue 6 est fixée, par exemple par des cannelures 35, sur un arbre 36 monté sur roulements à aiguilles 37 dans le boîtier 1, 3, l'une des extrémités de l'arbre traversant le couvercle ou le corps, suivant le cas, de manière à former un embout d'arbre 38 recevant le maneton excentrique de la tringlerie de direction (non représentée). Dans cette forme de réalisation, il n'est bien sûr par nécessaire que le boîtier formé par le corps 1 et le couvercle 3 soit ouvert périphériquement comme dans les cas précédents. Il peut au contraire être totalement fermé par la partie de paroi latérale correspondante 39 du corps de boîtier 1.

La figure 8 présente une variante du mode dé réalisation de la figure 1. Elle n'en diffère que par le fait que l'ensemble formé par l'organe d'entrée de la transmission (axe 9) et le distributeur associé 12 s'étendent en formant un angle aigu par rapport au corps 1 du mécanisme.

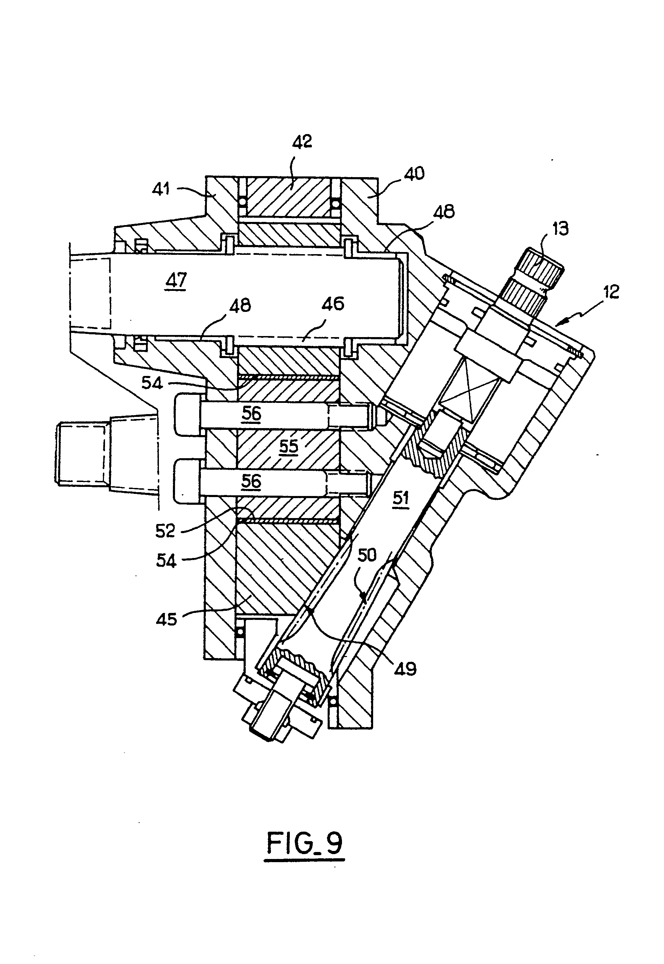

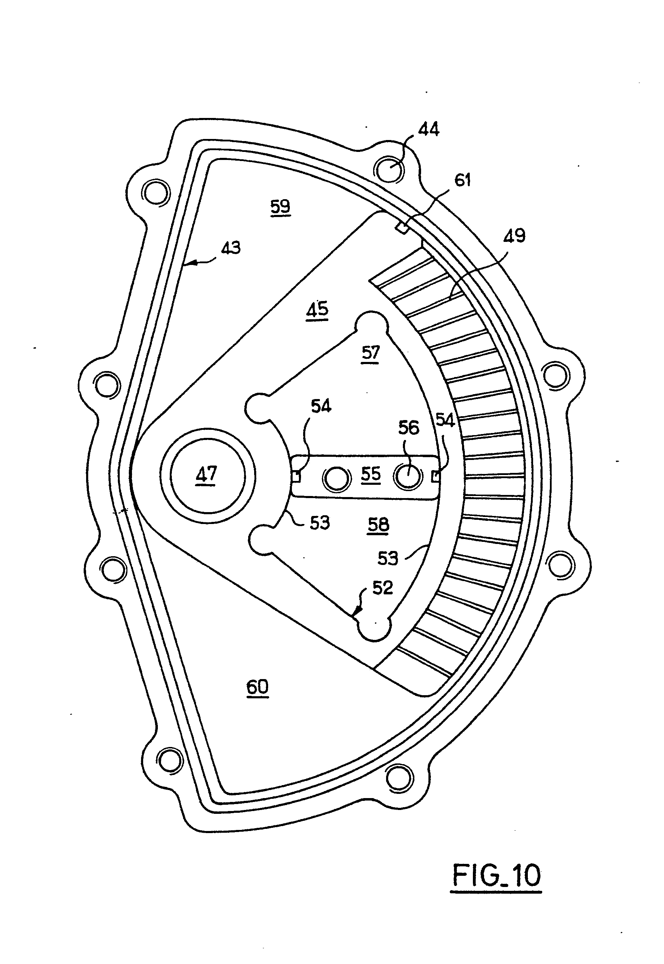

Les figures 9 et 10 représentent un mécanisme selon l'invention réalisé sous une forme sectorielle.

Le boitier est ici constitué de l'assemblage, par des vis reçues dans des trous périphériques 44, d'un corps plat 40, d'une plaque formant couvercle 41 et d'une pièce périphérique intermédiaire 42 (qui peut être formée d'une seule pièce avec le corps 40), et définit une cavité interne en forme de secteur 43 d'ouverture légèrement inférieure à 180°. A l'intérieur de cette cavité est monté à pivotement étanche un engrenage en forme de secteur 45 d'ouverture légèrement inférieure à un quadrant, par exemple par des cannelures 46, sur un arbre de sortie 47 monté tourillonnant dans le boîtier sur des coussinets 48 et se prolongeant à l'extérieur du boîtier pour se terminer en organe récepteur du maneton de la tringlerie de direction (non représentée).

Le bord périphérique du secteur 45 est muni, sur la majeure partie de son extension angulaire, d'une denture 49 avec laquelle vient s'engrener un pignon 50 formé sur l'arbre de sortie ou secondaire 51 du distributeur 12, comme dans les modes de réalisation précédents. Une telle disposition de l'organe d'entrée est similaire à celle de la figure 8, si ce n'est que le pignon 50 a ici une conicité orientée dans le sens contraire (pignon divergent).

Le secteur pivotant 45 comporte également une fenêtre interne 52 délimitée radialement par deux surfaces cylindriques 53 coaxiales à l'arbre de sortie 47, sur lesquelles vient s'ajuster, par l'intermédiaire de joints 54, un bloc transversal ou une cloison 55 analogue aux cloisons 24 précédentes, fixé au corps de boîtier 40 et au couvercle 41 par des vis 56. Cette cloison définit ainsi dans la fenêtre 52 deux chambres de travail 57 et 58 équivalentes aux chambres 27 et 28 des modes de réalisation précédents, et dont le fonctionnement est le même. Des joints à profil fermé, analogues aux joints 26 précédents, entourent la fenêtre 52 et coopèrent à coulissement étanche avec les faces internes du corps de boîtier 40 et du couvercle 41. Les chambres 59 et 60, formées extérieurement entre les parois latérales du secteur 45 et les parois de la cavité en forme de secteur 43, sont neutres si l'on suppose que ce mécanisme doit fonctionner de la même manière que celle décrit dans le cas de la figure 1, mais il est possible également de les utiliser à des fins particulières, par exemple pour amplifier l'assistance par fluide à partir d'un certain niveau de l'effort d'entrée appliqué et, dans ce but, le distributeur peut être pourvue de moyens classiques pour raccorder en parallèle les chambres homologues des deux paires de chambres 59, 57 et 60, 58, respectivement, ou pour alimenter les chambres homologues de chaque paire de façon séquentielle et modulée, par exemple par des restrictions variables, en fonction de la course d'actionnement de l'organe de sortie 45 (ou de l'organe primaire 13 du distributeur). Dans ce cas, il est évident que les deux chambres extérieures 59 et 60 doivent être isolées hydrauliquement l'une de l'autre, par exemple au moyen de joints tels 61.

Bien entendu, ces caractéristiques sont également applicables à d'autres réalisations basées sur le principe de la figure 1, en utilisant les chambres de l'une des fenêtres 21 comme chambres principales de travail et les chambres de l'autre fenêtre comme chambres d'amplification de l'assistance à partir d'un certain degré de rotation du disque 6 ou de réaction dans le distributeur 12.

## Revendications

1. Mécanisme d'actionnement à assistance par fluide comprenant un organe d'entrée (8, 9; 50, 51), destiné à être relié à un système de commande d'actionnement par l'intermédiaire d'un distributeur de fluide rotatif (12) et comprenant un pignon (8; 50) coopérant en engrènement avec un secteur denté (7; 49) formé sur une zone périphérique d'un corps au moins partiellement discoïde (6; 45) supporté en rotation autour d'un arbre (5; 36; 47) dans un boîtier (1, 3; 40, 41) et solidaire d'un organe de sortie (6; 45) destiné à être relié à un système mené à actionner, le corps comportant des moyens coopérant à coulissement étanche avec des parois intérieures du boîtier et avec une cloison transversale fixe (24; 55) s'étendant entre les parois intérieures en vis-à-vis du boîtier pour définir, dans le boîtier, une paire de chambres de travail (27, 28; 57, 58) reliées au distributeur (12), caractérisé en ce que le corps (6; 45) comporte au moins une fenêtre traversante en forme de secteur de couronne (21; 52) coaxial à l'axe de l'arbre (5; 36; 47) et dans laquelle est disposée la cloison transversale fixe (24; 55), dont les extrémités radialement opposées coopèrent à coulissement étanche (25, 54) avec les parois cylindriques (22; 53) de la fenêtre pour définir dans cette dernière ladite paire de chambres de travail (27, 28; 57, 58).

2. Mécanisme selon la revendication 1, caractérisé en ce qu'il comprend des moyens (1a, 6a; 31, 32, 34) de limitation de course d'actionnement du corps (6; 45).

3. Mécanisme selon la revendication 2, caractérisé en ce qu'il comprend des butées mécaniques (31, 32; 34) portées par le boîtier (1, 3) et constituant lesdits moyens de limitation.

4. Mécanisme selon l'une des revendications 1 à 3; caractérisé en ce que le corps (6) comporte un bras (19) faisant saillie hors de la périphérie du boîtier (1, 3) et destiné à être relié au système mené à actionner.

5. Mécanisme selon l'une des revendications 1 à 3, caractérisé en ce que l'arbre (36, 47) est solidaire du corps (6; 45),tourillonne dans le boîtier (1, 3; 40, 41) et fait saillie hors de ce dernier pour être relié au système mené à actionner.

6. Mécanisme selon l'une des revendications 1 à 5, caractérisé en ce que le corps est un disque (6) reçu dans une cavité cylindrique du boîtier (1, 3) coaxiale audit axe.

7. Mécanisme selon l'une des revendications 1 à 5, caractérisé en ce que le corps (45) a la forme d'un secteur reçu dans une cavité en forme de secteur (43) du boîtier (40, 41) coaxiale audit axe.

8. Mécanisme selon l'une des revendications précédentes, caractérisé en ce que le corps (6; 45) et le pignon (8; 50) de l'organe d'entrée (9; 51) constituent une transmission à engrenages coniques (7; 49).

9. Mécanisme selon la revendication 8, caractérisé en ce que l'axe de l'organe d'entrée (9) est parallèle audit axe du secteur denté.

10. Mécanisme selon la revendication 8, caractérisé en ce que l'axe de l'organe d'entrée (9; 51) forme un angle avec ledit axe du secteur denté.

11. Mécanisme selon l'une des revendications précédentes, caractérisé en ce qu'il comprend au moins deux paires de chambres de travail (27-28; 57, 59-58, 6 à), les chambres homologues des différentes paires étant reliées en parallèle aux sorties de distribution respectives (16,17) du distributeur (12).

12. Mécanisme selon l'une des revendications 1 à 10, caractérisé en ce qu'il comprend au moins deux paires de chambres de travail (27-28; 57, 59-58, 60), les chambres homologues des différentes paires étant alimentées sélectivement par le distributeur (12) de façon séquentielle en fonction de la course d'actionnement du corps (6; 45).

13. Mécanisme selon des revendications précédentes comportant un distributeur hydraulique rotatif (12) à éléments primaire (13) et secondaire (9; 51) coaxiaux, caractérisé en ce que le pignon (8; 50) est formé d'une seule pièce avec l'élément secondaire (9; 51).

## Patentansprüche

1. Strömungsmittel-Servobetätigungseinrichtung mit einem Eingangsglied (8,9;50,51), das über einen Strömungsmitteldrehverteiler (12) mit einem Steuersystem verbindbar ist und ein Zahnrad (8;50) aufweist, das mit einem verzahnten Sektor (7;49) in Eingriff steht, der an einem Umfangsbereich eines zumindest teilweise scheibenförmigen Körpers (6;45) gebildet ist, der in einem Gehäuse (1,3;40,41) um eine Welle (5;36;47) drehbar gelagert und mit einem Ausgangsglied (6;45) fest verbunden ist, das mit einem zu betätigenden System verbindbar ist, wobei der Körper Mittel umfaßt, die abgedichtet gleitend mit Innenwänden des Gehäuses und mit einer festgelegten quer verlaufenden Trennwand (24;55) zusammenwirken, die sich zwischen den Innenwänden gegenüber dem Gehäuse erstreckt, um in dem Gehäuse zwei Arbeitskammern (27,28;57,58) zu bilden, die mit dem Verteiler (12) verbunden sind, dadurch gekennzeichnet, daß der Körper (6;45) mindestens ein durchgehendes Fenster in Form eines Ringsektors (21;52) aufweist, der koaxial zur Achse der Welle (5;36;47) verläuft und in dem die festgelegte quer verlaufende Trennwand (24;55) angeordnet ist, deren radial entgegengesetzte Enden abgedichtet gleitend (25,54) mit den zylindrischen Wänden (22;53) des Fensters zusammenwirken, um in dem letzteren die beiden Arbeitskammern (27,28;57,58) zu bilden.

2. Einrichtung nach Anspruch 1, dadurch gekennzeichnet, daß sie Begrenzungsmittel (1a, 6a; 31, 32, 34) zum Begrenzen des Betätigungshubes des Körpers (6; 45) aufweist.

3. Einrichtung nach Anspruch 2, dadurch gekennzeichnet, daß sie mechanische Anschläge (31, 32; 34) aufweist, die von dem Gehäuse (1, 3) getragen werden und die besagten Begrenzungsmittel bilden.

4. Einrichtung nach einem der Ansprüche 1-3, dadurch gekennzeichnet, daß der Körper (6) einen Arm (19) umfaßt, der über den Umfang des -Gehäuses (1, 3) vorsteht und mit dem zu betätigenden System verbindbar ist.

5. Einrichtung nach einem der Ansprüche 1-3, dadurch gekennzeichnet, daß die Welle (36, 47) mit dem Körper (6; 45) fest verbunden ist, in dem Gehäuse (1, 3; 40, 41) gelagert ist und aus dem letzteren vorsteht, um mit dem zu betätigenden System verbunden zu werden.

6. Einrichtung nach einem der Ansprüche 1-5, dadurch gekennzeichnet, daß der Körper eine Scheibe (6) ist, die in einem zylindrischen Hohlraum des Gehäuses (1, 3) koaxial zu der Achse untergebracht ist.

7. Einrichtung nach einem der Ansprüche 1-5, dadurch gekennzeichnet, daß der Körper (45) die Form eines Sektors hat, der in einem sektorförmigen Hohlraum (43) des Gehäuses (40, 41) koaxial zu der Achse untergebracht ist.

8. Einrichtung nach einem der vorhergehenden Ansprüche, dadurch gekennzeichnet, daß der Körper (6; 45) und das Zahnrad (8; 50) des Eingangsgliedes (9; 51) ein Kegelradgetriebe (7; 49) bilden.

9. Einrichtung nach Anspruch 8, dadurch gekennzeichnet, daß die Achse des Eingangsgliedes (9) parallel zu der besagten Achse des verzahnten Sektors verläuft.

10. Einrichtung nach Anspruch 8, dadurch gekennzeichnet, daß die Achse des Eingangsgliedes (9; 51) mit der Achse des verzahnten Sektors einen Winkel bildet.

11. Einrichtung nach einem der vorhergehenden Ansprüche, dadurch gekennzeichnet, daß sie mindestens zwei Paare von Arbeitskammern (27-28; 57, 59-58, 6a) aufweist, wobei die entsprechenden Kammern der verschiedenen Paare parallelgeschaltet an den entsprechenden Verteilerausgängen (16, 17) des Verteilers (12) angeschlossen sind.

12. Einrichtung nach einem der Ansprüche 1-10, dadurch gekennzeichnet, daß sie mindestens zwei Paare von Arbeitskammern (27-28; 57, 59-58, 60) aufweist, wobei die entsprechenden Kammern der verschiedenen Paare von dem Verteiler (12) in Abhängigkeit von dem Betätigungshub des Körpers (6; 45) in Aufeinanderfolge wahlweise gespeist werden.

13. Einrichtung nach einem der vorhergehenden Ansprüche mit einem hydraulischen Drehverteiler (12), der koaxiale Primärteile (13) und Sekundärteile (9; 51) aufweist, dadurch gekennzeichnet, daß das Zahnrad (8; 50) einstückig mit dem Sekundärteil (9; 51) ausgebildet ist.

## Claims

1. A fluid actuating servo mechanism comprising an input member (8, 9; 50, 51) adapted to be connected to an actuation control system via a rotational fluid distributor (12) and comprising a pinion (8;50) in engagement with a toothed sector (7; 59) formed at a peripheral zone of an at least partially disc-shaped body (6; 45) supported for rotation about a shaft (5; 36; 47) in a casing (1, 3; 40, 41) and fixed to an output member (6; 45) adapted to be connected to a system to be actuated, the body comprising means slidingly cooperating in fluid-tight manner with interior walls of the casing and with a fixed transverse partition (24; 55) extending between the interior walls opposite the casing for defining in the casing a pair of work chambers (27, 28; 57, 58) connected to the distributor (12), characterized in that the body (6; 45) comprises at least one transverse window in the shape of an annular sector (21; 52) coaxial to the axis of the shaft (5; 36; 37) and in which said fixed transverse partition (24; 55) is disposed, the radially opposite ends thereof slidingly cooperating in fluid-tight manner (25, 54) with the cylindrical walls (22; 53) of the window for defining in the latter said pair of work chambers (27, 28; 57, 58).

2. Mechanism according to claim 1, characterized in that it comprises means (1a, 6a; 31, 32, 34) for limiting the path of actuation of the body (6; 45).

3. Mechanism according to claim 2, characterized in that it comprises mechanical abutments (31, 32; 34) supported by the casing (1, 3) and constituting said limitation means.

4. Mechanism according to any of claims 1 to 3, characterized in that the body (6) comprises an arm (19) projecting beyond the periphery of the casing (1, 3) and intended to be connected to the system to be actuated.

5. Mechanism according to any of claims 1 to 3, characterized in that the shaft (36, 47) is fixed to the body (6; 45), is journalled in the casing (1, 3; 40, 41) and projects out of the latter to be connected to the system to be actuated.

6. Mechanism according to any of claims 1 to 5, characterized in that the body is a disc (6) received in a cylindrical cavity of the casing (1, 3) coaxial to said axis.

7. Mechanism according to any of claims 1 to 5, characterized in that the body (45) is in the shape of a sector received in a sector-shaped cavity (43) of the casing (40, 41) coaxial to said axis.

8. Mechanism according to any of the preceding claims, characterized in that the body (6; 45) and the pinion (8; 50) of the input member (9; 51) constitute a conical gear transmission (7; 49)

9. Mechanism according to claim 8, characterized in that the axis of the input member (9) is parallel to said axis of the toothed sector.

10. Mechanism according to claim 8, characterized in that the axis of the input member (9; 51) includes an angle with said axis of the toothed sector.

11. Mechanism according to any of the preceding claims, characterized in that it comprises at least two pairs of work chambers (27-28; 57, 59-58, 6a), the corresponding chambers of the different pairs being connected in parallel to the respective distribution outlets (16, 17) of the distributor (12).

12. Mechanism according to any of claims 1 to 10, characterized in that it comprises at least two pairs of work chambers (27-28; 57, 59-58, 60), the corresponding chambers of the different pairs being selectively fed from the distributor (12) in sequential manner in response to the course of actuation of the body (6; 45).

13. Mechanism according to any of the preceding claims, including a rotational hydraulic distributor (12) having coaxial primary (13) and secondary (9; 51) elements, characterized in that the pinion (8; 50) is integral with the secondary element (9; 51).

FIG. 1

## FIG_2

FIG_3

FIG_4

FIG. 5

FIG. 6

FIG. 7

FIG. 8

FIG. 9

FIG_10